# EUROPEAN PATENT SPECIFICATION

(11) **EP 4 632 225 B1**
(45) Date of publication and mention of the grant of the patent: **18.11.2026**
(21) Application number: 25166352.2
(22) Date of filing: 26.03.2025
(51) Int. Cl.: F04B 39/06, F04B 39/16, F04B 49/06, F04B 49/10

(54) **COMPRESSOR SYSTEM, METHOD FOR CONTROLLING DISCHARGE TEMPERATURE AND RELATED DEVICE**
VERDICHTERSYSTEM, VERFAHREN ZUR STEUERUNG DER AUSTRITTSTEMPERATUR UND ZUGEHÖRIGE VORRICHTUNG
SYSTÈME DE COMPRESSEUR, PROCÉDÉ DE RÉGULATION DE TEMPÉRATURE DE DÉCHARGE ET DISPOSITIF ASSOCIÉ

(30) Priority: 08.04.2024 CN 202410418037
(43) Date of publication of application: 15.10.2025
(73) Proprietor: Fusheng Industrial (Shanghai) Co., Ltd., Shanghai 201612 (CN)
(72) Inventor: LIU, Chi-En, 24158 New Taipei City (TW); KUO, Ting-Yu, 24158 New Taipei City (TW); HUANG, Yi-Chao, 24158 New Taipei City (TW)
(74) Representative: Weickmann & Weickmann PartmbB

(56) References cited:
- EP-B1- 3 269 980
- EP-B2- 2 484 911
- WO-A1-2023/171099
- DE-B4- 102013 102 879
- US-A1- 2023 358 248

## Description

### TECHNICAL FIELD

The present disclosure relates to the field of fluid machinery technologies, and in particular to a compressor system, a method and device for controlling a discharge temperature, an electronic device, a computer-readable storage medium, and a computer program product.

### BACKGROUND

A compressor is a machine used to compress gas, such as air, to increase a gas pressure, which can provide power for various tools, transportation devices, lifting devices, and grabbing devices. Therefore, compressors are widely used in machinery manufacturing, metallurgy, shipbuilding, electronics, chemicals, oil and gas and so on.

In the related arts, a method for controlling a discharge temperature of a compressor is easily affected by the environment, and there is a risk of condensed water generation and high discharge temperature. Related technologies are known from patent publication documents WO2023171099A1 and EP2484911B2.

### SUMMARY

The invention is defined by the independent claims 1 and 8. Embodiments of the present disclosure provide a compressor system, including: a compressed gas unit, including a compressor body, wherein the compressor body includes a discharge end; a temperature sensor, disposed at the discharge end of the compressor body, and configured to measure a discharge temperature of a compressed gas discharged from the discharge end of the compressor body; a discharge temperature control module, electrically connected to the compressed gas unit and the temperature sensor, respectively, and including: a controller, configured to generate a first control signal according to a target temperature of the compressed gas unit and the discharge temperature; a disturbance observer, configured to generate a final disturbance measurement signal of the compressed gas unit according to the discharge temperature. The discharge temperature control module is configured to generate a second control signal according to the first control signal and the final disturbance measurement signal, and send the second control signal to the compressed gas unit, to control the discharge temperature of the compressed gas discharged from the discharge end of the compressor body.

Embodiments of the present disclosure provide a method for controlling a discharge temperature, including: obtaining a discharge temperature of a compressed gas discharged from a discharge end of a compressor body in a compressed gas unit; obtaining a target temperature of the compressed gas unit; generating a first control signal according to the target temperature of the compressed gas unit and the discharge temperature; generating a final disturbance measurement signal of the compressed gas unit according to the discharge temperature; generating a second control signal according to the first control signal and the final disturbance measurement signal, and sending the second control signal to the compressed gas unit, to control the discharge temperature of the compressed gas discharged from the discharge end of the compressor body.

Embodiments of the present disclosure, not covered by the appended patent claims, provide a device for controlling a discharge temperature, comprising: a discharge temperature obtaining module, configured to obtain a discharge temperature of a compressed gas discharged from a discharge end of a compressor body within a compressed gas unit; a target temperature obtaining module, configured to obtain a target temperature of the compressed gas unit; a first control signal generation module, configured to generate a first control signal according to the target temperature of the compressed gas unit and the discharge temperature; a final disturbance measurement signal generation module, configured to generate a final disturbance measurement signal of the compressed gas unit according to the discharge temperature; and a second control signal generation module, configured to generate a second control signal according to the first control signal and the final disturbance measurement signal, and send the second control signal to the compressed gas unit to control the discharge temperature of the compressed gas discharged from the discharge end of the compressor body.

Embodiments of the present disclosure, not covered by the appended patent claims, provide an electronic device, including a processor; and a memory configured to store a program, wherein the program, when executed by the processor, causes the electronic device to implement the method for controlling the discharge temperature in any embodiment of the present disclosure.

Embodiments of the present disclosure, not covered by the appended patent claims, provide a computer-readable storage medium having a computer program stored thereon, wherein the computer program is suitable for being loaded and executed by a processor to cause an electronic device including the processor to execute the method for controlling the discharge temperature in any embodiment of the present disclosure.

Embodiments of the present disclosure, not covered by the appended patent claims, provide a computer program product, which, when executed by a processor, implements the method for controlling the discharge temperature in any embodiment of the present disclosure.

### BRIEF DESCRIPTION OF THE DRAWINGS

FIG. 1 shows a schematic structural diagram of a compressor system according to an embodiment of the present disclosure.
FIG. 2 shows a schematic structural diagram of another compressor system according to an embodiment of the present disclosure.
FIG. 3 shows a schematic structural diagram of another compressor system according to an embodiment of the present disclosure.
FIG. 4 shows a schematic structural diagram of another compressor system according to an embodiment of the present disclosure.
FIG. 5 shows a schematic structural diagram of another compressor system according to an embodiment of the present disclosure.
FIG. 6 shows a schematic structural diagram of another compressor system according to an embodiment of the present disclosure.
FIG. 7 shows a schematic structural diagram of another compressor system according to an embodiment of the present disclosure.
FIG. 8 shows a schematic structural diagram of a cooler according to an embodiment of the present disclosure.
FIG. 9 shows a schematic structural diagram of another cooler according to an embodiment of the present disclosure.
FIG. 10 shows a schematic structural diagram of another cooler according to an embodiment of the present disclosure.
FIG. 11 shows a schematic structural diagram of another cooler according to an embodiment of the present disclosure.
FIG. 12 shows a schematic structural diagram of another cooler according to an embodiment of the present disclosure.
FIG. 13 shows a schematic structural diagram of another cooler according to an embodiment of the present disclosure.
FIG. 14 shows a flowchart of a method for controlling a discharge temperature according to an embodiment of the present disclosure.
FIG. 15 shows a block diagram of a device for controlling a discharge temperature according to an embodiment of the present disclosure.
FIG. 16 shows a schematic diagram of a comparison of target temperature values provided by the related art and an embodiment of the present disclosure.
FIG. 17 shows a schematic diagram of a comparison of effects of producing condensed water of methods for controlling a discharge temperature provided by the related art and an embodiment of the present disclosure.
FIG. 18 shows a schematic diagram of a comparison of discharge temperature response effects of methods for controlling a discharge temperature provided by the related art and an embodiment of the present disclosure.
FIG. 19 shows a schematic structural diagram of an electronic device according to an embodiment of the present disclosure.
FIG. 20 shows a schematic diagram of a computer-readable storage medium according to an embodiment of the present disclosure.

### DETAILED DESCRIPTION

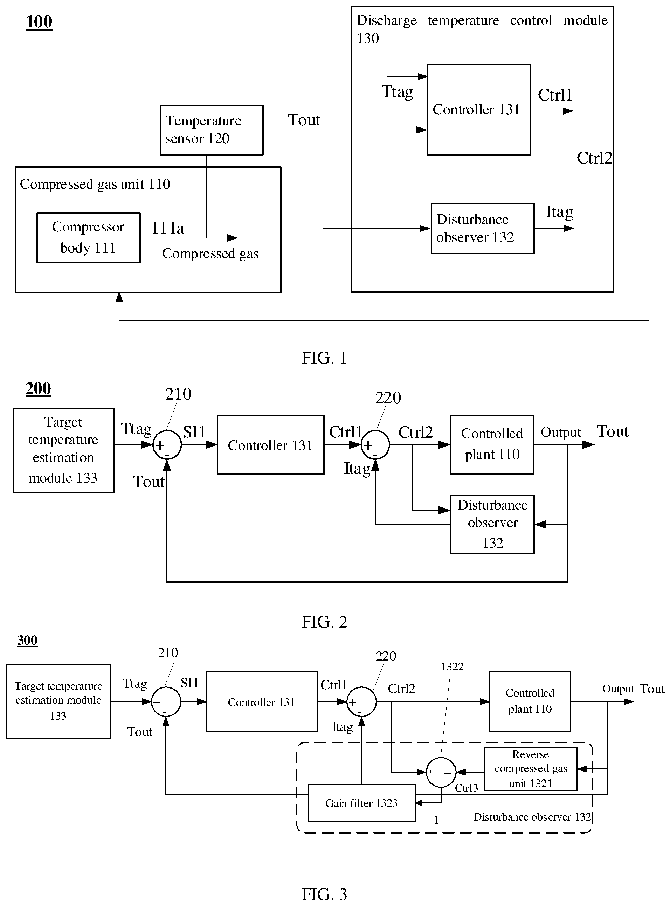

FIG. 1 shows a schematic structural diagram of a compressor system according to an embodiment of the present disclosure. As shown in FIG. 1, the compressor system 100 according to the embodiment of the present disclosure includes a compressed gas unit 110, a temperature sensor 120 and a discharge temperature control module 130. The compressed gas unit 110 in the embodiment of the present disclosure can be any component, model, a combination of the component and/or the model that can realize a gas compression function. The compressed gas unit may also be referred to as a compressor or a fluid machine. When the compressed gas unit is used to compress air, it may be referred to as an air compressor, but the present disclosure does not limit a type of the compressed gas.

The compressed gas unit 110 may include a compressor body 111. The compressor body 111 may include a discharge end 111a, which may be used to discharge the compressed gas generated after being compressed by the compressor body. The temperature sensor 120 may be disposed at the discharge end 111 of the compressor body 111, and the temperature sensor 120 may be configured to measure a discharge temperature Tout (i.e., an actual measured value of the discharge temperature) of the compressed gas discharged from the discharge end 111a of the compressor body 111. The discharge temperature control module 130 may be electrically connected to the compressed gas unit 110 and the temperature sensor 120, respectively, so that the discharge temperature control module 130 may receive the discharge temperature Tout of the compressed gas discharged from the discharge end 111a of the compressor body 111 sent by the temperature sensor 120, generate a second control signal Ctrl2 according to the received discharge temperature Tout, and send the generated second control signal Ctrl2 to the compressed gas unit 110. After the compressed gas unit 110 receives the second control signal Ctrl2 sent by the discharge temperature control module 130, it may control, according to the second control signal Ctrl2, the discharge temperature Tout of the compressed gas discharged from the discharge end 111a of the compressor body 111, that is, control a magnitude of a value of the discharge temperature Tout measured by the temperature sensor.

It should be understood that "electrical connection" in embodiments of the present disclosure includes a wireless connection or a wired connection, as long as a signal transmission function can be achieved.

With continued reference to FIG. 1, the discharge temperature control module 130 may further include a controller 131 and a disturbance observer 132.

The controller 131 includes a first input terminal and a second input terminal. The first input terminal of the controller 131 may be configured to receive a target temperature Ttag of the compressed gas unit 111, and the second input terminal of the controller 131 may be coupled to an output terminal of the temperature sensor 120 to receive the discharge temperature Tout output by the temperature sensor 120. The controller 131 may be configured to generate a first control signal Ctrl1 according to the target temperature Ttag of the compressed gas unit 110 and the discharge temperature Tout, measured by the temperature sensor 120, of the compressed gas output from the discharge end 111a of the compressor body 111.

The controller in embodiments of the present disclosure may be a Proportion Integral (PI) controller or a Proportion Integral Differential (PID) controller, but the present disclosure is not limited thereto.

In embodiments of the present disclosure, the target temperature refers to a temperature at which a compression energy efficiency of the compressed gas unit is improved as much as possible, and the normal operation of the compressed gas unit is guaranteed, on the basis of preventing the compressed gas discharged from the discharge end of the compressor body from generating the condensed water. In some embodiments, the target temperature can be changed in real time, that is, an operating state and environmental state of the compressed gas unit can be detected in real time, and the target temperature can be adjusted dynamically in real time according to the operating state and the environmental state of the compressed gas unit detected in real time, so as to ensure that the compressed gas does not generate the condensed water and improve the compression energy efficiency as much as possible. In some other embodiments, the target temperature may also be a preset fixed value, or the target temperature may be updated according to a preset time, for example, the target temperature is updated monthly or periodically, which is not limited in the present disclosure.

In embodiments of the present disclosure, the target temperature may be generated inside the discharge temperature control module 130, or obtained externally the discharge temperature control module 130, for example, the target temperature is obtained from other electronic devices through a network, which is not limited in the present disclosure.

In embodiments of the present disclosure, the target temperature may be determined by adding a preset control temperature range on a dew point temperature. The dew point temperature refers to the lowest temperature at which the compressed gas discharged from the discharge end of the compressor body does not produce the condensed water, that is, the lowest allowable discharge temperature value. The preset control temperature range can be set according to an actual physical property of the compressed gas unit 110, such as the viscosity, stability and deterioration over time of the oil within the desired values, temperature tolerance of materials of various components of the compressor. The control temperature range can be, for example, between 1°C and 10°C. In practical applications, the control temperature range can be expanded depending on the actual operating conditions and the environment of the compressor body. Since the target temperature set in embodiments of the present disclosure is greater than or equal to the dew point temperature, thereby preventing the generation of condensed water. In embodiments of the present disclosure, the dew point temperature can be calculated in real time and dynamically according to an actual operating state and an environmental state of the compressor detected, and a value of the optimal target discharge temperature can be calculated according to the dew point temperature calculated in real time and dynamically, so as to achieve no condensed water and reduce the discharge temperature as much as possible to save energy.

The disturbance observer 132 includes a first input terminal, and the first input terminal of the disturbance observer 132 is coupled to the output terminal of the temperature sensor 120 to receive the discharge temperature Tout output by the temperature sensor 120. The disturbance observer 132 may be configured to generate a final disturbance measurement signal Itag of the compressed gas u 110 according to the exhaust temperature Tout sent from the temperature sensor 120.

In embodiments of the present disclosure, the final disturbance measurement signal Itag may represent any detectable factor that may affect the accuracy of a detection result of the discharge temperature Tout, such as interference caused by the addition of air of unknown quality or interference caused by the heat dissipation of the compressor.

The controller 131 and the disturbance observer 132 each include an output terminal, the output terminal of the controller 131 is configured to output the first control signal Ctrl1, and the output terminal of the disturbance observer 132 is configured to output the final disturbance measurement signal Itag. The discharge temperature control module 130 may be configured to generate a second control signal Ctrl2 according to the first control signal Ctrl1 and the final disturbance measurement signal Itag, and send the second control signal Ctrl2 to the compressed gas unit 110 to control the discharge temperature Tout of the compressed gas discharged from the discharge end 111a of the compressor body 111. For example, when the discharge temperature Tout measured by the temperature sensor 120 is greater than the target temperature Ttag, a temperature in a cavity of the compressor body 111 is reduced by the second control signal Ctrl2, so that the discharge temperature Tout of the compressed gas discharged from the discharge end 111a of the compressor body 111 decreases; and when the discharge temperature Tout measured by the temperature sensor 120 is less than the target temperature Ttag, the temperature in the cavity of the compressor body
111 is increased by the second control signal Ctrl2, so that the discharge temperature Tout of the compressed gas discharged from the discharge end 111a of the compressor body 111 increases.

The compressor system provided by embodiments of the present disclosure controls the discharge temperature discharged from the compressor body through the discharge temperature control module including both the controller and the disturbance observer. On the one hand, the discharge temperature can be reduced to improve the efficiency of the compressor. On the other hand, the disturbance observer is added to detect the interference, the detection of the discharge temperature can be prevented from being affected by the environment. In addition, the risk of the production of the condensed water and the high discharge temperature caused by the inappropriate PI value or PID value can be prevented, that is, the control performance of the discharge temperature is improved by using the controller and the disturbance observer. Furthermore, the risk of the production of the condensed water caused by the low discharge temperature can also be prevented by controlling the discharge temperature through the target temperature.

In an embodiment, the discharge temperature control module may further include a target temperature estimation module, which may be electrically connected to the compressed gas unit to estimate the target temperature Ttag of the compressed gas unit.

The following is an example with reference to an embodiment of FIG. 2. In the embodiment of FIG. 2, the compressed gas unit being a controlled plant is taken as an example for illustration, but the present disclosure is not limited thereto. The controlled plant may be a compressor model, a compressor component, a compression unit, or a fluid machine, etc. The controlled plant may also include a fluid output pipeline or a fluid delivery component, etc. As shown in FIG. 2, the compressor system 200 may include a target temperature estimation module 133, a first operator 210, the controller 131, a second operator 220, a controlled plant 110, and the disturbance observer 132. The target temperature estimation module 133, the controller 131, and the disturbance observer 132 may be built into the discharge temperature control module.

An output terminal of the target temperature estimation module 133 is coupled to a first input terminal of the first operator 210 to send the target temperature Ttag estimated by the target temperature estimation module 133 to the first operator 210. A second input terminal of the first operator 210 is coupled to an output terminal of the controlled plant 110, to input the discharge temperature Tout output by the controlled plant 110 to the first operator 210. The first operator 210 is configured to generate a first operation result SI1 according to the target temperature Ttag and the discharge temperature Tout. The first operation result SI1 indicates a difference between the discharge temperature Tout and the target temperature Ttag. For example, the first operator 210 may be a subtraction operator, and the first operation result SI1=Ttag-Tout, that is, the first operation result SI1 may be equal to the difference between the target temperature and the discharge temperature.

An output terminal of the first operator 210 is coupled to the input terminal of the controller 131 to input the first operation result SI1 into the controller 131. The controller 131 is configured to generate the first control signal Ctrl1 according to the first operation result SI1. The output terminal of the controller 131 is coupled to a first input terminal of the second operator 220 to input the first control signal Ctrl1 into the second operator 220. A second input terminal of the second operator 220 is coupled to the output terminal of the disturbance observer 132 to receive the final disturbance measurement signal Itag output by the disturbance observer 132. The second operator 220 is configured to generate a second control signal Ctrl2 according to the first control signal Ctrl1 and the final disturbance measurement signal Itag. The second control signal Ctrl2 represents the first control signal Ctrl1 with the interference being eliminated. For example, the second operator 220 may be a subtraction operator, and the second control signal Ctrl2=Ctrl1-Itag, that is, the second control signal Ctrl2 may be equal to the difference between the first control signal Ctrl1 and the final disturbance measurement signal Itag.

An output terminal of the second operator 220 is coupled to an input terminal of the controlled plant 110 and the first input terminal of the disturbance observer 132, respectively, to input the second control signal Ctrl2 to the controlled plant 110 and the disturbance observer 132, respectively. The controlled plant 110 is configured to control, according to the second control signal Ctrl2, the discharge temperature Tout output from its output terminal. The controlled plant 110 generates the discharge temperature Tout according to a physical characteristic of the controlled plant 110 and the second control signal Ctrl2.

The output terminal of the controlled plant 110 is also coupled to the second input terminal of the disturbance observer 132, to input the discharge temperature Tout to the disturbance observer 132. The disturbance observer 132 is configured to generate the final disturbance measurement signal Itag according to the second control signal Ctrl2 and the discharge temperature Tout.

In an embodiment, the disturbance observer may include an inverse compressed gas unit, a third operator, and a gain filter. The inverse compressed gas unit may be electrically connected to the compressed gas unit, and may be configured to generate a third control signal according to the discharge temperature. The third operator may be electrically connected to the inverse compressed gas unit, and may be configured to generate an initial disturbance measurement signal according to the third control signal and the second control signal. The gain filter may be electrically connected to the third operator, and may be configured to generate the final disturbance measurement signal according to the initial disturbance measurement signal.

It should be noted that the "electrical connection" in embodiments of the present disclosure means that signal transmission between two different components can be achieved, which can be achieved either by wired or by wireless means, and does not mean that the two different components must be physically connected.

In embodiments of the present disclosure, the inverse compressed gas unit refers to an inverse model or inverse function constructed according to a model of the compressed gas unit. When the compressed gas unit is the controlled plant, the inverse compressed gas unit may also be referred to as an inverse controlled plant or an inverse compressor model or an inverse compressor model or an inverse function operation unit. The following is an example with reference to FIG. 3, but the present disclosure is not limited thereto. As shown in FIG. 3, the difference from the embodiment of FIG. 2 is that the disturbance observer 132 may further include an inverse compressed gas unit 1321, a third operator 1322 and a gain filter 1323.

An input terminal of the inverse compressed gas unit 1321 is coupled to the output terminal of the controlled plant 110 to receive the discharge temperature Tout, and is configured to generate a third control signal Ctrl3 according to the discharge temperature Tout. An output terminal of the inverse compressed gas unit 1321 is coupled to a first input terminal of the third operator 1322 to input the third control signal Ctrl3 to the third operator 1322. A second input terminal of the third operator 1322 is coupled to the output terminal of the second operator 220 to receive the second control signal Ctrl2. The third operator 1322 is configured to generate an initial disturbance measurement signal I according to the third control signal Ctrl3 and the second control signal Ctrl2. For example, the third operator 1322 may be a subtraction operator, and the initial disturbance measurement signal I=Ctrl3-Ctrl2, that is, the initial disturbance measurement signal I may be equal to the difference between the third control signal Ctrl3 and the second control signal Ctrl2. Since there is noise in the discharge temperature control module and the controlled plant 110, the noise will interfere with the measured discharge temperature Tout. Therefore, embodiments of the present disclosure establish the inverse compressed gas unit 1321 (which may be called the inverse controlled plant) of an inverse mathematical model of the controlled plant 110 to detect the noise therein and process the noise. That is, the embodiments of the present disclosure can estimate an disturbance of the system through the inverse function of the controlled plant 110.

An input terminal of the gain filter 1323 is coupled to the third operator 1322 to receive the initial disturbance measurement signal I. The gain filter 1323 is configured to generate the final disturbance measurement signal Itag according to the initial disturbance measurement signal I. An output terminal of the gain filter 1323 is coupled to the second input terminal of the second operator 220 to input the final disturbance measurement signal Itag to the second operator 220.

In embodiments of the present disclosure, the disturbance observer calculates the initial disturbance measurement signal I according to the difference between the third control signal Ctrl3 and the second control signal Ctrl2 output by the inverse controlled plant. In addition, the gain filter is also included to suppress the inverse controlled plant from amplifying the signal noise, reduce the influence of the amplified signal noise, and obtain a more accurate final disturbance measurement signal Itag. The gain filter may include both a gain device and a filter or one of the gain device and the filter. In some embodiments, the gain filter may only include the filter to remove the high-frequency noise. In some other embodiments, the gain filter may include both the gain device and the filter. The filter may be a low-pass filter, and the gain device may be a constant multiplier, that is, a signal after passing through the low-pass filter may be multiplied by a constant, and the constant may be debugged and determined according to the actual application or a simulation test result to reduce the influence of the noise on the second control signal. The disturbance of the system is estimated using the inverse function of the controlled plant, and subsequently compensated to the control output after the filter and/or the gain adjustment, thereby enhancing the robustness of the system control and improving the control performance.

In embodiments of the present disclosure, the disturbance observer generates the final disturbance measurement signal Itag based on the output discharge temperature Tout of the controlled plant and the input second control signal Ctrl2 of the controlled plant, and then the detected interference is removed through the second operator, so that the discharge temperature control is more stable.

In an embodiment, the compressed gas unit may further include an oil separator coupled to the discharge end of the compressor body. The compressor system may further include an environmental state sensor and a pressure sensor. The environmental state sensor may be configured to detect environmental state information of the compressed gas unit. The pressure sensor may be provided in the oil separator, and may be configured to measure a discharge pressure of the compressed gas in the oil separator. The target temperature estimation module is electrically connected to the environmental state sensor and the pressure sensor, respectively, and is configured to receive the environmental state information and the discharge pressure and estimate the target temperature according to the environmental state information and the discharge pressure.

In embodiments of the present disclosure, the oil is injected into the cavity of the compressor body during the process of compressing the gas in the compressor body, and accordingly, the compressed gas discharged from the discharge end of the compressor body is mixed with the oil. Therefore, the oil separator is coupled to the downstream of the compressor body through a pipeline, and the oil separator is used to separate the compressed gas and the oil.

In embodiments of the present disclosure, the environmental state sensor may include one or more sensors, such as one or more of a temperature sensor, a humidity sensor, a pressure sensor, etc. The environmental state sensor may be configured to measure real-time environmental state information of the compressed gas unit. The discharge temperature control module may obtain the real-time environmental state information and the discharge pressure from the environmental state sensor and the pressure sensor through the built-in target temperature estimation module, so as to estimate the target temperature in real time.

For example, the environmental state sensor may be configured to measure one or more of humidity, an atmospheric pressure, an ambient temperature of the compressor, etc. The target temperature estimation module may calculate the dew point temperature based on one or more of the humidity, the atmospheric pressure, the ambient temperature of the compressor, etc. and the discharge pressure, and determine the optimal target temperature Ttag based on the dew point temperature.

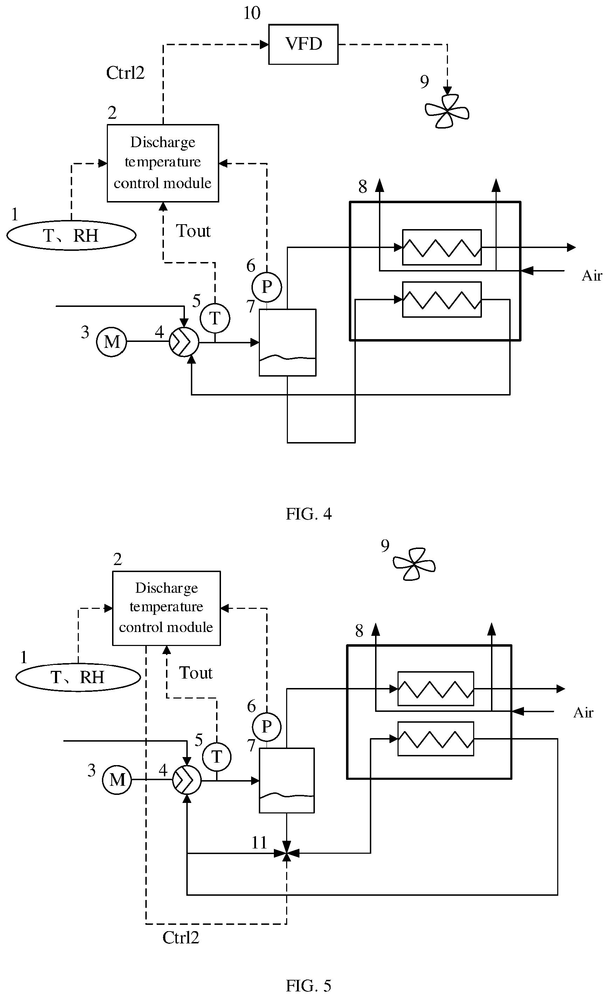

The following is an example with reference to embodiments shown in FIGS. 4 to 6.

As shown in FIG. 4, the air may be used to cool the compressed gas and the oil separated by the oil separator. The air for cooling may be provided by a variable frequency fan (that is, a fan with adjustable rotational speed). In the embodiment of FIG. 4, the amount of oil entering a cooler is not adjusted, that is, all the oil separated by the oil separator enters the cooler for cooling and then returns to the cavity of the compressor body 4.

In the embodiment of FIG. 4, it is assumed that the environmental state sensor includes a temperature and humidity sensor 1, which may be configured to measure an ambient temperature T and humidity TH of the compressed gas unit.

As shown in FIG. 4, all other components except the discharge temperature control module 2 may be included in the controlled plant, for example, the following components may be included: the temperature and humidity sensor 1 (which may be disposed at an inlet of the compressor body 4 to measure the ambient temperature and the humidity, and the inlet is used to send the gas to be compressed into the compressor body 4 for compression), a motor 3 (a driver, configured to drive the compressor body), the compressor body 4, the temperature sensor 5 (configured to measure the discharge temperature of the compressed gas discharged from the discharge end of the compressor body 4), the pressure sensor 6 (configured to measure the discharge pressure in the oil separator 7), the oil separator 7 (which may contain a fine oil separator arranged therein), a heat exchanger 8, a cooling fan 9, and a Variable-Frequency Drive (VFD) 10. The heat exchanger 8 is disposed downstream of the oil separator 7. The heat exchanger 8 and the oil separator 7 are coupled by two pipelines, each of which is used to respectively output the compressed gas and the oil that are separated to the heat exchanger 8. The cooling fan 9 is disposed around the heat exchanger 8 to provide the air for cooling to enter the heat exchanger 8 to cool the compressed gas and the oil in the heat exchanger 8.

The discharge temperature control module 2 is electrically connected to the temperature and humidity sensor 1, the temperature sensor 5 and the pressure sensor 6 respectively to calculate the dew point temperature according to the ambient temperature, the humidity and the discharge pressure, determine the target temperature according to the dew point temperature, obtain the discharge temperature, and generate the second control signal Ctrl2 according to the discharge temperature and the target temperature.

The discharge temperature control module 2 is also coupled to the VFD 10. When the discharge temperature is higher than the target temperature, the rotation speed of the cooling fan 9 is increased by the second control signal Ctrl2 to reduce a temperature of the oil in the heat exchanger 8. If the discharge temperature is lower than the target temperature, the rotation speed of the cooling fan 9 is decreased to increase the temperature of the oil in the heat exchanger 8. The cooled oil is re-injected into the compressor body 4 through an oil pipeline to control the discharge temperature of the compressed gas discharged from the compressor body 4.

The compressor system provided by embodiments of the present disclosure simplifies the temperature sensor arrangement, and requires only a single temperature sensor disposed at the compressor body outlet. Furthermore, the discharge temperature control module determines the optimal target temperature by superimposing the dew point temperature calculated by the target temperature estimation module on the control temperature range, thereby reducing the number of temperature sensors after the discharge end, but also preventing the generation of condensate and control the discharge temperature at the target temperature.

An embodiment of FIG. 5 is similar to the embodiment of FIG. 4 in that both use the air cooling, and the difference is that the embodiment of FIG. 5 uses an oil injection regulating valve/oil injection control valve 11 to control the amount of oil entering the heat exchanger 8, thereby controlling the discharge temperature of the compressed gas discharged from the compressor body 4. The cooling fan 9 in the embodiment of FIG. 5 is a fixed-frequency fan, that is, its rotation speed is fixed and cannot be adjusted, and it can only be controlled to be turned on or off, and it is in an on state when the compressor body 4 is running.

In the embodiment of FIG. 5, except for the discharge temperature control module 2, other components can be disposed in the controlled plant, including: the temperature and humidity sensor 1, the motor 3 (the driver), the compressor body 4, the temperature sensor 5, the pressure sensor 6, the thin oil drum 7, the heat exchanger 8, the cooling fan 9, and the oil injection regulating valve 11.

The difference between the embodiment of FIG. 5 and the embodiment of FIG. 4 is that the discharge temperature control module 2 is coupled to the oil injection regulating valve 11, and the oil injection regulating valve 11 is controlled by the second control signal Ctrl2. The oil injection regulating valve 11 may be, for example, a three-way valve, which has three valve ports, a first valve port is coupled to the oil separator through a pipeline to receive the oil separated by the oil separator 7, a second valve port is coupled to a second input port of the heat exchanger 8 through a pipeline (a first input port of the heat exchanger 8 is used to receive the compressed gas separated by the oil separator 7), and a third valve port is coupled to an oil inlet of the compressor body 4 through a pipeline.

When the discharge temperature is higher than the target temperature, the second control signal Ctrl2 is used to increase the opening of the second valve port in the oil injection regulating valve 11 and decrease the opening of the third valve port, to increase the amount of oil cooled by the heat exchanger 8 and reduce the amount of oil directly flowing into the compressor body 4 from the oil separator 7, that is, reduce the amount of oil entering a chamber of the compressor body 4 without being cooled by the heat exchanger 8, increase the amount of oil entering the chamber of the compressor body 4 after cooling, reduce the temperature in the chamber, and thus reduce the discharge temperature.

If the discharge temperature is lower than the target temperature, the second control signal Ctrl2 is used to reduce the opening of the second valve port in the oil injection regulating valve 11 and increase the opening of the third valve port to reduce the amount of oil cooled by the heat exchanger 8 and increase the amount of oil directly flowing into the compressor body 4 from the oil separator 7, that is, increase the amount of oil entering the chamber of the compressor body 4 without being cooled by the heat exchanger 8, reduce the amount of oil entering the chamber of the compressor body 4 after cooling, increase the temperature in the chamber, and thus increase the discharge temperature. In this embodiment, the fan can only be turned on or off, and the rotation speed cannot be adjusted.

In some embodiments, the oil injection regulating valve 11 can be used to control whether the oil is cooled by the heat exchanger 8. If the discharge temperature measured at the discharge end of the compressor body 4 is greater than the target temperature, the oil injection regulating valve 11 is adjusted so that the oil passes through the heat exchanger 8 before entering the compressor body 4. If the discharge temperature is lower than the target temperature, the oil injection regulating valve 11 is adjusted so that the oil enters the compressor body 4 directly without passing through the heat exchanger 8.

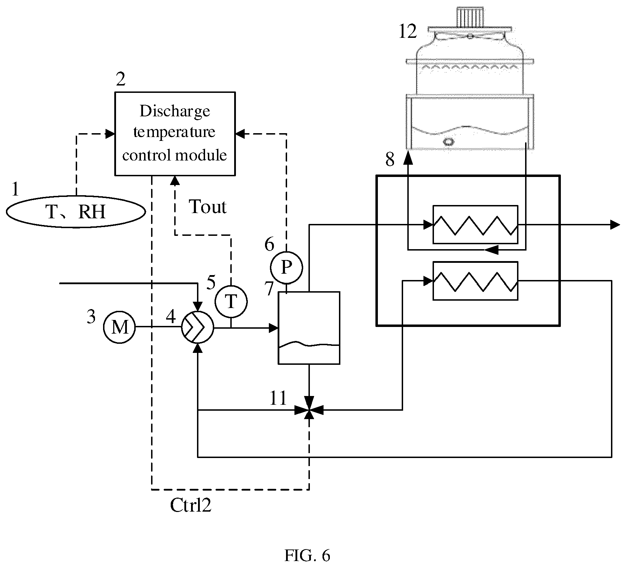

An embodiment of FIG. 6 is similar to the embodiment of FIG. 5 is in that both use the oil injection regulating valve to adjust the amount of oil for cooling, but the difference is that the embodiment of FIG. 6 uses water to cool the compressed gas and the oil.

In the embodiment of FIG. 6, all components except the discharge temperature control module 2 belong to the controlled plant, including: the temperature and humidity sensor 1, the motor 3 (driver), the compressor body 4, the temperature sensor 5, the pressure sensor 6, the thin oil drum 7, the heat exchanger 8, the oil injection regulating valve 11, and a cooling water tower 12. The cooling water tower 12 is used to provide cooling water in the heat exchanger 8.

In an embodiment, the cooling fluid includes a cooling liquid. The compressed gas unit further includes: a cooling liquid delivery control module electrically connected to the discharge temperature control module and coupled to the cooler, and configured to receive the second control signal and control, according to the second control signal, a flow or flow rate of the cooling liquid flowing into the cooler, to control the cooling of the oil and the compressed gas.

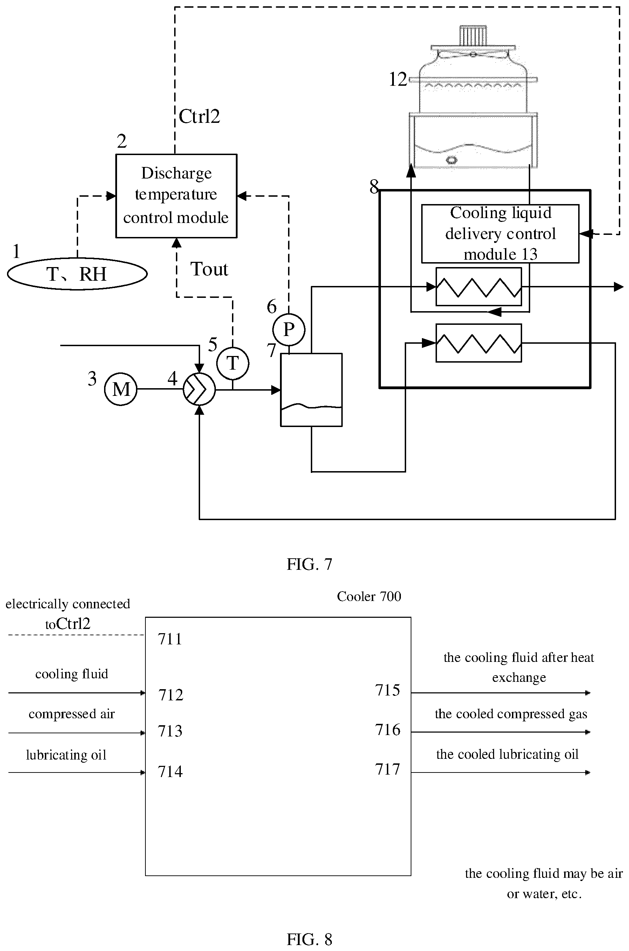

For example, in an embodiment of FIG. 7, the cooling liquid being the cooling water and the cooler including the cooling water tower 12 are taken as an example for illustration. The difference between the embodiment of FIG. 7 and the embodiment of FIG. 6 is that the amount of oil for cooling can be adjusted without using the oil injection regulating valve, but the discharge temperature control module 2 is electrically connected to the cooling liquid delivery control module 13, and the cooling liquid delivery control module 13 receives the second control signal Ctrl2 output by the discharge temperature control module 2, and can use the second control signal Ctrl2 to control one or more of a flow rate or a flow, and a water temperature, etc. of the cooling water provided by the cooling water tower 12. For example, when the discharge temperature is greater than the target temperature, the flow rate of the cooling water is controlled to increase, or the water temperature of the cooling water is reduced to reduce the discharge temperature; and when the discharge temperature is less than the target temperature, the flow rate of the cooling water is controlled to decrease, or the water temperature of the cooling water is increased to increase the discharge temperature. In an embodiment, the cooling liquid delivery control module 13 may be, for example, a water valve or a water pump, and control the flow rate or the flow of the cooling water through the second control signal Ctrl2.

It should be noted that the control of the discharge temperature is not limited to the above examples, and the present disclosure is not limited to using the cooling water tower to provide the cooling water, nor is it limited to using the fan to provide the cooling air. In some other embodiments, the above examples can be combined arbitrarily, for example, the oil injection regulating valve of FIG. 6 and the cooling liquid delivery control module of FIG. 7 can be combined, that is, both the oil injection regulating valve and the cooling liquid delivery control module can be controlled by the second control signal. For another example, the variable frequency fan of FIG. 4 and the oil injection regulating valve of FIG. 5 can also be combined.

In an embodiment, the compressed gas unit may also include the oil separator and the cooler.

The oil separator may be coupled to the discharge end of the compressor body to deliver the compressed gas mixed with oil discharged from the discharge end of the compressor body into the oil separator. The cooler may be coupled to the oil separator, and may be used to deliver the compressed gas and oil separated by the oil separator into the cooler, respectively. The cooler may also be used to deliver the cooling fluid (i.e., a fluid used to cool the separated compressed gas and oil, which may also be referred to as a fluid for cooling, for example, it may include the cooling gas (such as the cooling air or the air for cooling) and the cooling liquid (such as the cooling water or the water for cooling)) into the cooler, and cool the compressed gas and the oil through the cooling fluid to output the cooling fluid after heat exchange, the cooled compressed gas, and the cooled oil, respectively. The cooler is electrically connected to the discharge temperature control module, and is used to receive the second control signal and control, according to the second control signal, the cooling of the oil by the cooling fluid, to control the temperature of the oil returning to the compressor body, and control, through the temperature of the oil returning to the compressor body, the discharge temperature of the compressed gas discharged from the discharge end of the compressor body.

The cooler provided by embodiments of the present disclosure is exemplified below with reference to FIGS. 8 to 13, but the present disclosure is not limited thereto. In FIGS. 8 to 13, the compressed gas being the compressed air is taken as example for illustration below.

As shown in FIG. 8, a cooler (a cooling device or a cooling unit) 700 provided in embodiments of the present disclosure is a subsystem with the function of a heat exchanger, which is a three-input and three-output subsystem with a temperature regulation function. A communication interface 711 of the cooler 700 may be electrically connected to the discharge temperature control module to receive the second control signal Ctrl2. A first input terminal 712 of the cooler 700 may be used to input the cooling fluid, a second input terminal 713 of the cooler 700 may be used to input the compressed air, and a third input terminal 714 of the cooler 700 may be used to input the oil, such as a lubricating oil. A first output terminal 715 of the cooler 700 may be used to output the cooling fluid after the heat exchange, a second output terminal 716 of the cooler 700 may be used to output the cooled compressed gas, and a third output terminal 717 of the cooler 700 may be used to output the cooled lubricating oil.

In an embodiment, the cooling fluid includes the cooling air. The cooler includes a rotational speed regulating device, an air generator, and a first heat exchange device. The rotational speed regulating device is electrically connected to the discharge temperature control module, and is configured to receive the second control signal. The air generator is electrically connected to the rotational speed regulating device, and is configured to adjust the rotation speed of the air generator under the control of the second control signal to generate the cooling air. The first heat exchange device is coupled to the air generator and the oil separator, respectively, and is configured to deliver the cooling gas, and the separated compressed gas and oil into the first heat exchange device, respectively, and cool the compressed gas and the oil through the cooling gas, to output the cooled compressed gas, the cooled oil, and the cooling fluid after the heat exchange, respectively.

In embodiments of the present disclosure, the rotational speed regulating device may be any device capable of regulating the rotation speed of the air generator, such as the variable-frequency drive. When the air generator to be regulated is a fan, the rotational speed regulating device may also be referred to as a fan rotational speed regulating device. The air generator refers to any device capable of generating the cooling air, and the fan is taken as example for illustration in the following.

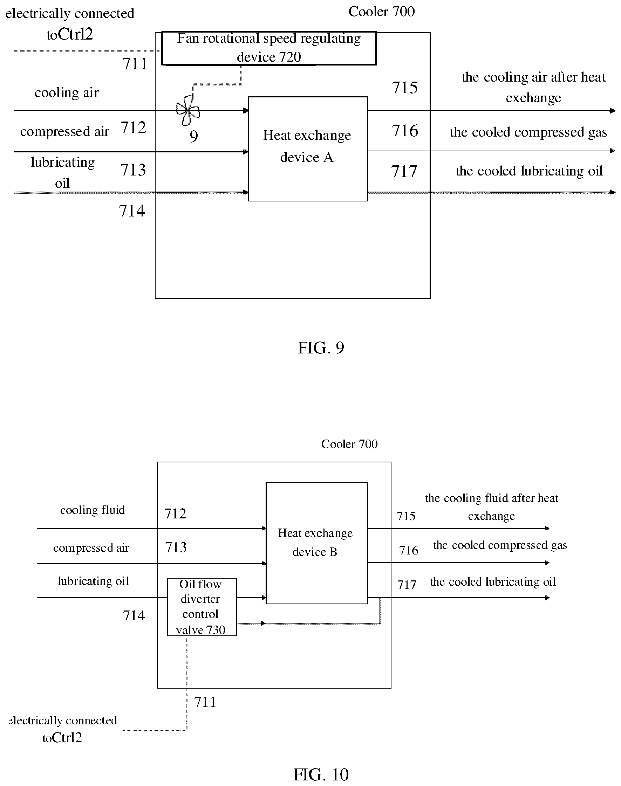

As shown in FIG. 9, the cooler 700 may include a fan rotational speed regulating device 720, a fan 9 and a heat exchange device A (a first heat exchange device). The fan rotational speed regulating device 720 receives the second control signal Ctrl2, and controls the rotation speed of the fan 9 according to the second control signal Ctrl2, thereby controlling the cooling air entering the heat exchange device A.

In an embodiment, the cooler includes an oil flow diverter control valve and a second heat exchange device. The oil flow diverter control valve is coupled to the oil separator and the discharge temperature control module, respectively. The second heat exchange device is coupled to the oil flow diverter control valve and the oil separator, respectively, and is used to deliver the cooling fluid and the compressed gas separated by the oil separator into the second heat exchange device, respectively. The oil flow diverter control valve is used to, under the control of the second control signal, control a proportion of the oil separated by the oil separator entering the second heat exchange device. The second heat exchange device is used to cool the compressed gas and the oil in the second heat exchange device through the cooling fluid to output the cooling fluid after heat exchange, the cooled compressed gas, and the cooled oil, respectively.

As shown in FIG. 10, the cooler 700 includes an oil flow diverter control valve 730 (i.e., the above-mentioned oil injection regulating valve 11), which receives the lubricating oil separated by the oil separator and is electrically connected to the discharge temperature control module to receive the second control signal Ctrl2, to determine, under the control of the second control signal Ctrl2, the amount of oil flowing into the heat exchange device B (the second heat exchange device) and the amount of oil not flowing into the heat exchange device B, and make the oil cooled by the heat exchange device B and the oil not passing through the heat exchange device B mixed and then flowed into the compressor body. The cooling fluid in the embodiment of FIG. 10 may be the cooling air or the cooling water.

In an embodiment, the cooling fluid includes the cooling air. The cooler further includes the air generator configured to generate the cooling air.

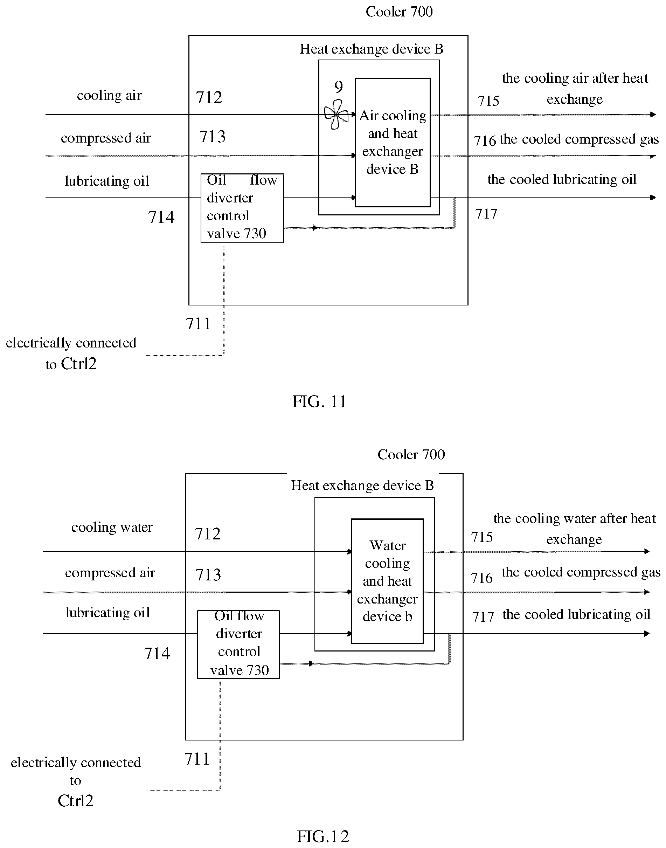

As shown in FIG. 11, the difference from the embodiment of FIG. 10 is that the cooling fluid is the cooling air generated by the fixed-frequency fan 9. In this case, the heat exchange device B is an air cooling and heat exchanger device B in this case, and after the cooler 700, the output is the cooling air after heat exchange.

In an embodiment, the cooling fluid includes the cooling liquid.

As shown in FIG. 12, the difference from the embodiment of FIG. 10 is that the cooling fluid is the cooling water. In this case, the heat exchange device B includes a water cooling and heat exchanger device b, and the output is the cooling water after heat exchange.

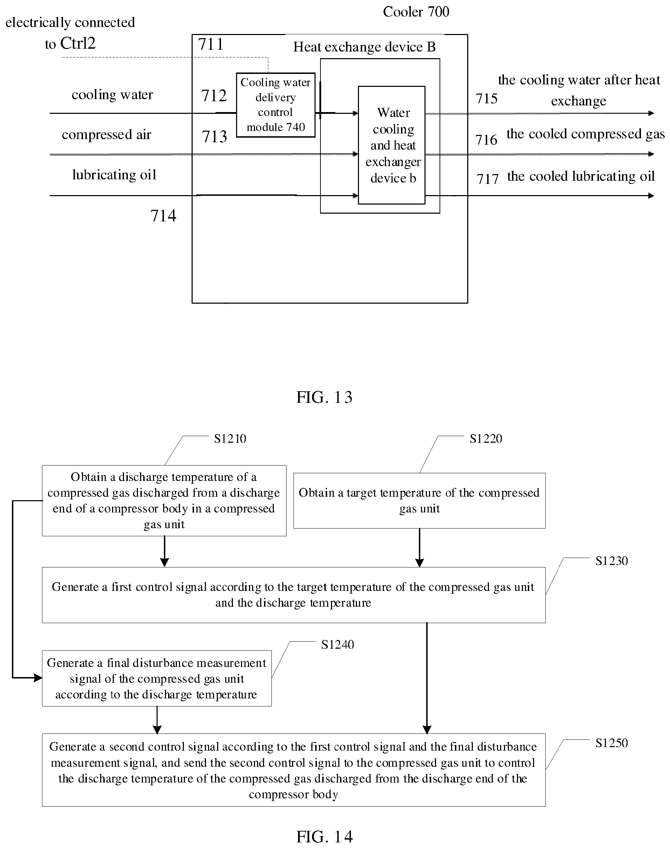

As shown in FIG. 13, the difference from the embodiment of FIG. 12 is that it includes a cooling water delivery control module 740 (an example of the cooling liquid delivery control module 13 described above). An input terminal of the cooling water delivery control module 740 is electrically connected to the discharge temperature control module through the communication interface 711 of the cooler 700 to receive the second control signal Ctrl2. Under the control of the second control signal Ctrl2, the cooling water delivery control module 740 adjusts at least one of the flow, the flow rate, the water temperature, etc. of the cooling water input to the water cooling and heating exchanger device b. FIG. 14 shows a flowchart of a method for controlling a discharge temperature according to an embodiment of the present disclosure. The method provided in embodiments of the present disclosure can be executed by any electronic device with computing and processing capabilities. For example, the method can be executed by the above-mentioned discharge temperature control module or the device for controlling the discharge temperature described below. The method provided in embodiments of the present disclosure can be used to control the discharge temperature of the fluid machine or the compressed gas unit.

As shown in FIG. 14, the method provided by embodiments of the present disclosure may include steps S1210 to S1250.

In S1210, a discharge temperature of a compressed gas discharged from a discharge end of a compressor body in a compressed gas unit is obtained.

Embodiments of the present disclosure may provide the compressed gas unit and a temperature sensor. The temperature sensor is disposed at the discharge end of the compressor body of the compressed gas unit to measure the discharge temperature of the discharged compressed gas. A discharge temperature control module is also provided, which is electrically connected to an environmental state sensor (e.g., a temperature and humidity sensor), a temperature sensor, and a pressure sensor. The discharge temperature control module obtains the discharge temperature from the temperature sensor.

In S1220, a target temperature of the compressed gas unit is obtained.

For example, the discharge temperature control module includes a target temperature estimation module, which generates the target temperature through an ambient temperature and humidity detected by the temperature and humidity sensor, an atmospheric pressure and a discharge pressure measured by the pressure sensor.

In S 1230, a first control signal is generated according to the target temperature of the compressed gas unit and the discharge temperature.

For example, the discharge temperature control module further includes a controller, which generates the first control signal according to a difference between the target temperature provided by the target temperature estimation module and the discharge temperature measured by the temperature sensor.

In S1240, a final disturbance measurement signal of the compressed gas unit is generated according to the discharge temperature.

For example, the discharge temperature control module further includes a disturbance observer that generates the final disturbance measurement signal according to the discharge temperature.

In S1250, a second control signal is generated according to the first control signal and the final disturbance measurement signal, and the second control signal is sent to the compressed gas unit to control the discharge temperature of the compressed gas discharged from the discharge end of the compressor body.

For example, the discharge temperature control module may generate the second control signal according to the difference between the first control signal and the final disturbance measurement signal. The controlled plant receives the second control signal, generates the discharge temperature, and generates a discharge temperature signal after measuring with the temperature sensor.

It should be understood that an execution order of S1210 and S1220 is not limited, and the two can be executed in parallel, or S1210 can be executed first and then S1220 is executed, or S1220 can be executed first and then S1210 is executed. An execution order of S1230 and S1240 is not limited, and the two can be executed in parallel, or S1230 can be executed first and then S1240 is executed, or S1240 can be executed first and then S1230 is executed.

In an embodiment, obtaining the target temperature of the compressed gas unit includes: obtaining environmental state information of the compressed gas unit; obtaining a discharge pressure of the compressed gas in an oil separator of the compressed gas unit; and estimating the target temperature based on the environmental state information and the discharge pressure.

In an embodiment, generating the final disturbance measurement signal of the compressed gas unit according to the discharge temperature includes: generating a third control signal according to the discharge temperature; generating an initial disturbance measurement signal according to the third control signal and the second control signal; and generating the final disturbance measurement signal according to the initial disturbance measurement signal.

For other contents of the embodiment of FIG. 14, reference may be made to the above-mentioned embodiment, which will not be described in detail here.

Based on the same inventive concept, embodiments of the present disclosure further provide a device for controlling a discharge temperature, as described in the following embodiments. Since the principle of solving the problem in the device embodiment is similar to that in the above method embodiment, the implementation of the device embodiment can refer to the implementation of the above embodiment, and the repeated parts will not be repeated.

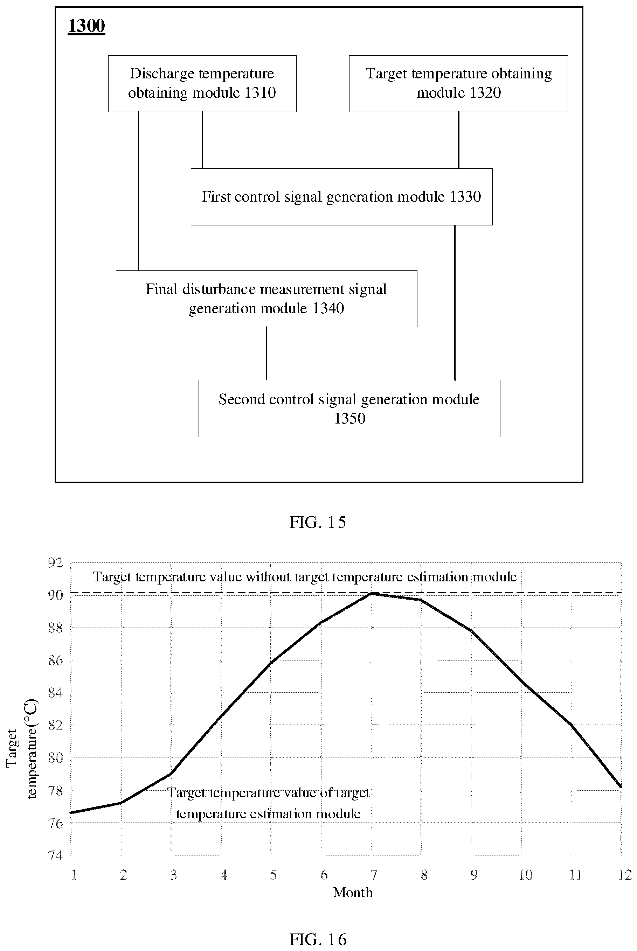

FIG. 15 shows a block diagram of a device for controlling a discharge temperature according to an embodiment of the present disclosure. As shown in FIG. 15, the device for controlling the discharge temperature 1300 provided by embodiments of the present disclosure may include a discharge temperature obtaining module 1310, a target temperature obtaining module 1320, a first control signal generation module 1330, a final disturbance measurement signal generation module 1340, and a second control signal generation module 1350.

The discharge temperature obtaining module 1310 may be configured to obtain a discharge temperature of a compressed gas discharged from a discharge end of a compressor body in a compressed gas unit. The target temperature obtaining module 1320 may be configured to obtain a target temperature of the compressed gas unit. The first control signal generation module 1330 may be configured to generate a first control signal according to the target temperature of the compressed gas unit and the discharge temperature. The final disturbance measurement signal generation module 1340 may be configured to generate a final disturbance measurement signal of the compressed gas unit according to the discharge temperature. The second control signal generation module 1350 may be configured to generate a second control signal according to the first control signal and the final disturbance measurement signal, and send the second control signal to the compressed gas unit to control the discharge temperature of the compressed gas discharged from the discharge end of the compressor body.

In an embodiment, the target temperature obtaining module 1320 may include: an environmental state information obtaining unit, configured to obtain environmental state information of the compressed gas unit; a discharge pressure obtaining unit, configured to obtain a discharge pressure of the compressed gas in an oil separator of the compressed gas unit; and a target temperature estimation unit, configured to estimate the target temperature based on the environmental state information and the discharge pressure.

In an embodiment, the final disturbance measurement signal generation module 1340 may include: a third control signal generation unit, configured to generate a third control signal according to the discharge temperature; an initial disturbance measurement signal generation unit, configured to generate an initial disturbance measurement signal according to the third control signal and the second control signal; and a final disturbance measurement signal generation unit, configured to generate the final disturbance measurement signal according to the initial disturbance measurement signal.

As shown in FIG. 16, the ordinate represents the target temperature and the abscissa represents the month. In different months, the target temperature estimation module provided by embodiments of the present disclosure can dynamically calculate the target temperatures of different months, which is unlike the fixed target temperature set in the related arts. Therefore, the target temperature estimation module provided by embodiments of the present disclosure can improve the energy efficiency of the compressor.

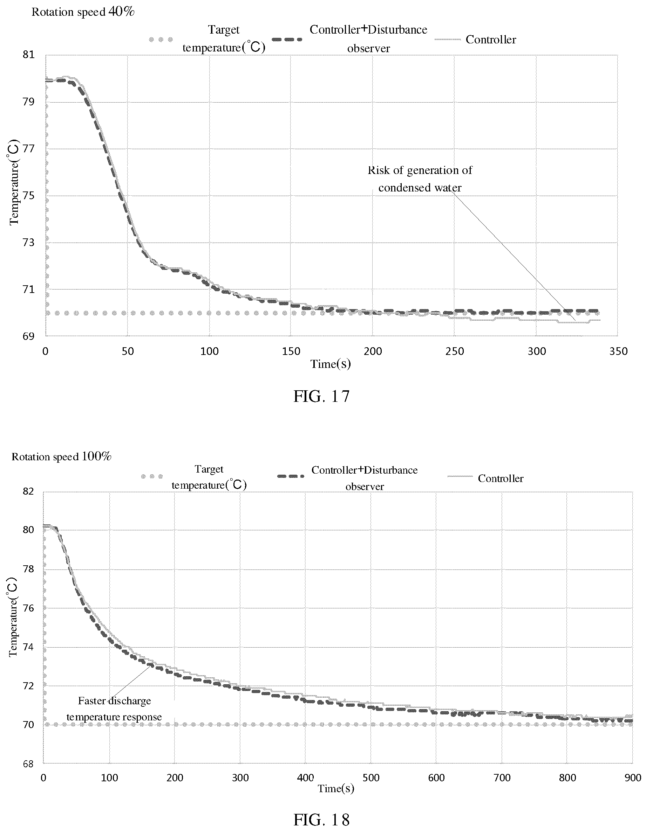

As shown in FIG. 17, the ordinate represents the temperature in degrees Celsius, and the abscissa represents the time in seconds. It is assumed here that a motor rotation speed of the compressor body 111 is 40%, and the target temperature is a fixed value. Under PI control, the discharge temperature may be lower than the dew point temperature, thereby generating the condensed water. The PI/PID plus the disturbance observer solution provided in embodiments of the present disclosure can avoid the generation of the condensed water.

As shown in FIG. 18, the ordinate represents the temperature and the abscissa represents the time, where it is assumed that the motor rotation speed of the compressor body 111 is 100%. The PI/PID plus the disturbance observer solution provided in embodiments of the present disclosure can track the target temperature faster and has a faster response speed.

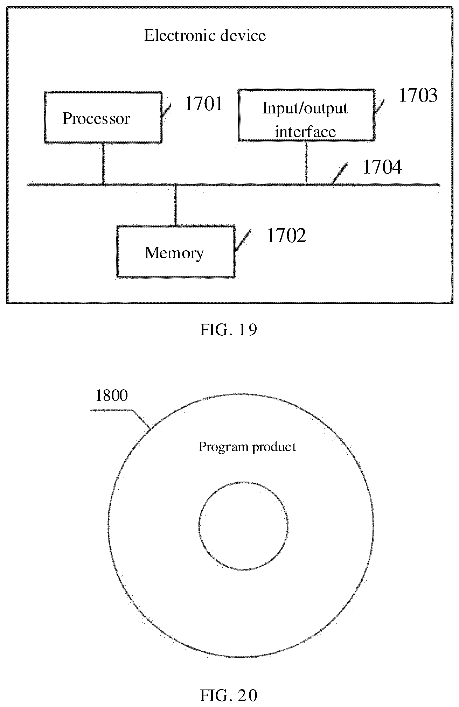

Reference is made to FIG. 19, which is a schematic structural diagram of an electronic device (such as a computer device) according to an embodiment of the present disclosure. As shown in FIG. 19, the electronic device in embodiments of the present disclosure may include: one or more processors 1701, a memory 1702, and an input/output interface 1703. The processor 1701, the memory 1702, and the input/output interface 1703 are connected via a bus 1704. The memory 1702 is used to store a computer program, which includes program instructions. The input/output interface 1703 is used to receive data and output data, such as for data interaction between a host machine and the electronic device, or for data interaction between various virtual machines in the host machine. The processor 1701 is configured to execute the program instructions stored in the memory 1702.

The processor 1701 can perform the following operations: obtaining a discharge temperature of a compressed gas discharged from a discharge end of a compressor body in a compressed gas unit; obtaining a target temperature of the compressed gas unit; generating a first control signal according to the target temperature of the compressed gas unit and the discharge temperature; generating a final disturbance measurement signal of the compressed gas unit according to the discharge temperature; generating a second control signal according to the first control signal and the final disturbance measurement signal, and sending the second control signal to the compressed gas unit, to control the discharge temperature of the compressed gas discharged from the discharge end of the compressor body.

The memory 1702 may include a read-only memory and a random access memory, and provide instructions and data to the processor 1701 and the input/output interface 1703. A portion of the memory 1702 may also include a non-volatile random access memory. In a specific implementation, the electronic device may execute the implementations provided by various steps in any of the above method embodiments through its built-in functional modules. For details, reference may be made to the implementations provided by the various steps in the figures shown in the above method embodiments, which will not be repeated here.

Embodiments of the present disclosure, not covered by the appended patent claims, provide an electronic device, including a processor, an input/output interface, and a memory. The processor obtains a computer program in the memory to execute each step of the method shown in any of the above embodiments.

Embodiments of the present disclosure, not covered by the appended patent claims, further provide a computer-readable storage medium having a computer program stored thereon. FIG. 20 shows a schematic diagram of a computer-readable storage medium according to an embodiment of the present disclosure. As shown in FIG. 20, a computer program product capable of implementing the above method of the present disclosure is stored on the computer-readable storage medium 1800. The computer program is suitable for being loaded by the processor and executing the method for controlling the discharge temperature provided in each step of any of the above embodiments.

Embodiments of the present disclosure, not covered by the appended patent claims, further provide a computer program product or a computer program, which includes computer instructions stored in a computer-readable storage medium. A processor of an electronic device reads the computer instructions from the computer-readable storage medium, and the processor executes the computer instructions, so that the electronic device executes the method provided in any of the above-mentioned embodiments.

## Claims

1. A compressor system, comprising:
a compressed gas unit (110), comprising a compressor body (111) with a discharge end (111a);
a temperature sensor (120), disposed at the discharge end of the compressor body (111), and configured to measure a discharge temperature of a compressed gas discharged from the discharge end of the compressor body (111); and
a discharge temperature control module (130), electrically connected to the compressed gas unit (110) and the temperature sensor (120), respectively, and comprising:
a controller (131), configured to generate a first control signal according to a target temperature of the compressed gas unit (110) and the discharge temperature; and
**characterized in that** the compressor system comprises
a disturbance observer (132), configured to generate a final disturbance measurement signal of the compressed gas unit (110) according to the discharge temperature;
wherein the discharge temperature control module (130) is configured to generate a second control signal according to the first control signal and the final disturbance measurement signal, and send the second control signal to the compressed gas unit (110) to control the discharge temperature of the compressed gas discharged from the discharge end (111a) of the compressor body (111),
wherein the discharge temperature control module (130) further comprises a target temperature estimation module (133), electrically connected to the compressed gas unit (110) and configured to estimate the target temperature of the compressed gas unit (110);
wherein the compressed gas unit (110) further comprises an oil separator (7) coupled to the discharge end of the compressor body (111),
wherein the compressor system further comprises:
an environmental state sensor, configured to detect environmental state information of the compressed gas unit (110); and
a pressure sensor (6), disposed in the oil separator (7), and configured to measure a discharge pressure of the compressed gas in the oil separator (7);
wherein the target temperature estimation module (133) is electrically connected to the environmental state sensor and the pressure sensor (6), respectively, and is configured to receive the environmental state information and the discharge pressure and estimate the target temperature according to the environmental state information and the discharge pressure;
wherein the disturbance observer (132) comprises:
an inverse compressed gas unit (1321), electrically connected to the compressed gas unit (110), and configured to generate a third control signal according to the discharge temperature;
a third operator (1322), electrically connected to the inverse compressed gas unit (1321), and configured to generate an initial disturbance measurement signal according to the third control signal and the second control signal; and
a gain filter (1323), electrically connected to the third operator (1322) and configured to generate the final disturbance measurement signal according to the initial disturbance measurement signal.

2. The compressor system according to claim 1, wherein
the oil separator (7)is configured to deliver the compressed gas mixed with oil, discharged from the discharge end of the compressor body (111), into the oil separator (7);
wherein the compressed gas unit (110) further comprises:
a cooler, coupled to the oil separator (7) and configured to deliver the compressed gas and the oil separated by the oil separator (7) into the cooler, respectively, wherein the cooler is further configured to deliver a cooling fluid into the cooler, and cool the compressed gas and the oil through the cooling fluid, delivering the cooling fluid after heat exchange, the cooled compressed gas, and the cooled oil, respectively;
wherein the cooler is electrically connected to the discharge temperature control module (130) and configured to receive the second control signal and control, according to the second control signal, the cooling fluid to cool the oil, controlling a temperature of the oil returning to the compressor body (111), and further configured to control, through the temperature of the oil returning to the compressor body (111), the discharge temperature of the compressed gas discharged from the discharge end of the compressor body (111).

3. The compressor system according to claim 2, wherein the cooling fluid comprises cooling gas, and the cooler comprises:
a rotational speed regulating device (720), electrically connected to the discharge temperature control module (130), and configured to receive the second control signal;
an air generator, electrically connected to the rotational speed regulating device (720), and configured to adjust a rotation speed of the air generator under the control of the second control signal, to generate the cooling gas; and
a first heat exchange device, coupled respectively to the air generator and the oil separator, configured to deliver the cooling gas, the separated compressed gas and the oil into the first heat exchange device, respectively, and to cool the compressed gas and the oil through the cooling gas, outputting the cooling fluid after heat exchange, the cooled compressed gas, and the cooled oil, respectively.

4. The compressor system according to claim 2, wherein the cooler comprises:
an oil flow diverter control valve, coupled to the oil separator (7) and the discharge temperature control module (130), respectively; and
a second heat exchange device, coupled to the oil flow diverter control valve and the oil separator (7), respectively, and configured to deliver the cooling fluid and the compressed gas separated from the oil separator into the second heat exchange device, respectively;
wherein the oil flow diverter control valve is configured to control, under the control of the second control signal, a proportion of the oil separated from the oil separator entering the second heat exchange device; and
the second heat exchange device is configured to cool the compressed gas and the oil within the second heat exchange device through the cooling fluid, outputting the cooling fluid after heat exchange, the cooled compressed gas, and the cooled oil, respectively.

5. The compressor system according to claim 4, wherein the cooling fluid comprises cooling gas, and the cooler further comprises:
an air generator, configured to generate the cooling gas.

6. The compressor system according to claim 4, wherein the cooling fluid comprises a cooling liquid.

7. The compressor system according to claim 2, wherein the cooling fluid comprises a cooling liquid, and the compressed gas unit (110) further comprises:
a cooling liquid delivery control module (13), electrically connected to the discharge temperature control module (130) and coupled to the cooler, and configured to receive the second control signal and control, according to the second control signal, a flow rate of the cooling liquid flowing into the cooler, controlling the cooling of the oil and the compressed gas.

8. A method for controlling a discharge temperature, comprising:
obtaining (S1210) a discharge temperature of a compressed gas discharged from a discharge end of a compressor body within a compressed gas unit;
obtaining (S1220) a target temperature of the compressed gas unit;
generating (S1230) a first control signal according to the target temperature of the compressed gas unit and the discharge temperature;
generating (S1240) a final disturbance measurement signal of the compressed gas unit according to the discharge temperature; and
generating (S1250) a second control signal according to the first control signal and the final disturbance measurement signal, and sending the second control signal to the compressed gas unit to control the discharge temperature of the compressed gas discharged from the discharge end of the compressor body,
**characterized in that** obtaining the target temperature of the compressed gas unit comprises:
obtaining environmental state information of the compressed gas unit;
obtaining a discharge pressure of the compressed gas within an oil separator of the compressed gas unit; and
estimating the target temperature according to the environmental state information and the discharge pressure;
or
wherein obtaining the target temperature of the compressed gas unit comprises:
estimating the target temperature by a target temperature estimation module;
wherein generating the first control signal according to the target temperature of the compressed gas unit and the discharge temperature comprises:
generating a first operation result according to the target temperature and the discharge temperature by a first operator; and
generating the first control signal according to the first operation result by a controller;
wherein generating the second control signal according to the first control signal and the final disturbance measurement signal comprises:
generating the second control signal according to the first control signal and the final disturbance measurement signal by a second operator;
wherein generating the final disturbance measurement signal of the compressed gas unit according to the discharge temperature comprises:
generating a third control signal according to the discharge temperature by an inverse compressed gas unit;
generating an initial disturbance measurement signal according to the third control signal and the second control signal by a third operator; and
generating the final disturbance measurement signal according to the initial disturbance measurement signal by a gain filter.

## Patentansprüche

1. Kompressorsystem, umfassend:
eine Druckgaseinheit (110), welche einen Kompressorkörper (111) mit einem Auslassende (111a) umfasst;
einen Temperatursensor (120), welcher an dem Auslassende des Kompressorkörpers (111) angeordnet ist und dazu eingerichtet ist, eine Auslasstemperatur eines Druckgases zu messen, welches aus dem Auslassende des Kompressorkörpers (111) ausgelassen wird; und
ein Auslasstemperatur-Steuerungsmodul (130), welches mit der Druckgaseinheit (110) und dem Temperatursensor (120) jeweils elektrisch verbunden ist und umfasst:
eine Steuereinheit (131), welche dazu eingerichtet ist, ein erstes Steuersignal gemäß einer Zieltemperatur der Druckgaseinheit (110) und der Auslasstemperatur zu generieren; und
**dadurch gekennzeichnet, dass** das Kompressorsystem eine Störgrößenbeobachtungseinheit (132) umfasst, welche dazu eingerichtet ist, ein endgültiges Störgrößenmesssignal der Druckgaseinheit (110) gemäß der Auslasstemperatur zu generieren;
wobei das Auslasstemperatur-Steuerungsmodul (130) dazu eingerichtet ist, ein zweites Steuersignal gemäß dem ersten Steuersignal und dem endgültigen Störgrößenmesssignal zu generieren und das zweite Steuersignal an die Druckgaseinheit (110) zu senden, um die Auslasstemperatur des Druckgases zu steuern, welches aus dem Auslassende (111a) des Kompressorkörpers (111) ausgelassen wird,
wobei das Auslasstemperatur-Steuerungsmodul (130) ferner ein Zieltemperatur-Schätzmodul (133) umfasst, welches mit der Druckgaseinheit (110) elektrisch verbunden ist und dazu eingerichtet ist, die Zieltemperatur der Druckgaseinheit (110) zu schätzen;
wobei die Druckgaseinheit (110) ferner einen Ölabscheider (7) umfasst, welcher an das Auslassende des Kompressorkörpers (111) gekoppelt ist,
wobei das Kompressorsystem ferner umfasst:
einen Umgebungszustandssensor, welcher dazu eingerichtet ist, Umgebungszustandsinformationen der Druckgaseinheit (110) zu erfassen; und
einen Drucksensor (6), welcher in dem Ölabscheider (7) angeordnet ist und dazu eingerichtet ist, einen Auslassdruck des Druckgases in dem Ölabscheider (7) zu messen;
wobei das Zieltemperatur-Schätzmodul (133) mit dem Umgebungszustandssensor und dem Drucksensor (6) jeweils elektrisch verbunden ist und dazu eingerichtet ist, die Umgebungszustandsinformationen und den Auslassdruck zu empfangen und die Zieltemperatur gemäß den Umgebungszustandsinformationen und dem Auslassdruck zu schätzen;
wobei die Störgrößenbeobachtungseinheit (132) umfasst:
eine inverse Druckgaseinheit (1321), welche mit der Druckgaseinheit (110) elektrisch verbunden ist und dazu eingerichtet ist, ein drittes Steuersignal gemäß der Auslasstemperatur zu generieren;
einen dritten Operator (1322), welcher mit der inversen Druckgaseinheit (1321) elektrisch verbunden ist und dazu eingerichtet ist, ein anfängliches Störgrößenmesssignal gemäß dem dritten Steuersignal und dem zweiten Steuersignal zu generieren; und
einen Verstärkungsfilter (1323), welcher mit dem dritten Operator (1322) elektrisch verbunden ist und dazu eingerichtet ist, das endgültige Störgrößenmesssignal gemäß dem anfänglichen Störgrößenmesssignal zu generieren.

2. Kompressorsystem nach Anspruch 1, wobei
der Ölabscheider (7) dazu eingerichtet ist, das mit Öl gemischte Druckgas, welches aus dem Auslassende des Kompressorkörpers (111) ausgelassen wird, in den Ölabscheider (7) zu leiten;
wobei die Druckgaseinheit (110) ferner umfasst:
einen Kühler, welcher an den Ölabscheider (7) gekoppelt ist und dazu eingerichtet ist, das Druckgas und das durch den Ölabscheider (7) abgeschiedene Öl jeweils in den Kühler zu leiten, wobei der Kühler ferner dazu eingerichtet ist, ein Kühlfluid in den Kühler zu leiten und das Druckgas und das Öl durch das Kühlfluid zu kühlen, wobei das Kühlfluid nach dem Wärmeaustausch, das gekühlte Druckgas und das gekühlte Öl jeweils geleitet werden;
wobei der Kühler mit dem Auslasstemperatur-Steuerungsmodul (130) elektrisch verbunden ist und dazu eingerichtet ist, das zweite Steuersignal zu empfangen und gemäß dem zweiten Steuersignal das Kühlfluid zu steuern, um das Öl zu kühlen, eine Temperatur des Öls zu steuern, welches zu dem Kompressorkörper (111) zurückgeführt wird, und ferner dazu eingerichtet ist, durch die Temperatur des Öls, welches zu dem Kompressorkörper (111) zurückgeführt wird, die Auslasstemperatur des Druckgases zu steuern, welches aus dem Auslassende des Kompressorkörpers (111) ausgelassen wird.

3. Kompressorsystem nach Anspruch 2, wobei das Kühlfluid Kühlgas umfasst und der Kühler umfasst:
eine Drehzahlregelungsvorrichtung (720), welche mit dem Auslasstemperatur-Steuerungsmodul (130) elektrisch verbunden ist und dazu eingerichtet ist, das zweite Steuersignal zu empfangen;
einen Luftgenerator, welcher mit der Drehzahlregelungsvorrichtung (720) elektrisch verbunden ist und dazu eingerichtet ist, eine Drehzahl des Luftgenerators unter der Steuerung des zweiten Steuersignals anzupassen, um das Kühlgas zu generieren; und
eine erste Wärmetauschvorrichtung, welche jeweils an den Luftgenerator und den Ölabscheider gekoppelt ist und dazu eingerichtet ist, das Kühlgas, das abgetrennte Druckgas und das Öl jeweils in die erste Wärmetauschvorrichtung zu leiten und das Druckgas und das Öl durch das Kühlgas zu kühlen, und das Kühlfluid nach dem Wärmeaustausch, das gekühlte Druckgas und das gekühlte Öl jeweils auszuleiten.

4. Kompressorsystem nach Anspruch 2, wobei der Kühler umfasst:
ein Ölstrom-Umschaltsteuerventil, welches jeweils an den Ölabscheider (7) und das Auslasstemperatur-Steuerungsmodul (130) gekoppelt ist; und
eine zweite Wärmetauschvorrichtung, welche jeweils an das Ölstrom-Umschaltsteuerventil und den Ölabscheider (7) gekoppelt ist und dazu eingerichtet ist, das Kühlfluid und das aus dem Ölabscheider abgetrennte Druckgas jeweils in die zweite Wärmetauschvorrichtung zu leiten;
wobei das Ölstrom-Umschaltsteuerventil dazu eingerichtet ist, unter der Steuerung des zweiten Steuersignals einen Anteil des aus dem Ölabscheider abgetrennten Öls zu steuern, welcher in die zweite Wärmetauschvorrichtung eintritt; und
wobei die zweite Wärmetauschvorrichtung dazu eingerichtet ist, das Druckgas und das Öl in der zweiten Wärmetauschvorrichtung durch das Kühlfluid zu kühlen, und das Kühlfluid nach dem Wärmeaustausch, das gekühlte Druckgas und das gekühlte Öl jeweils auszuleiten.

5. Kompressorsystem nach Anspruch 4, wobei das Kühlfluid Kühlgas umfasst und der Kühler ferner umfasst:
einen Luftgenerator, welcher dazu eingerichtet ist, das Kühlgas zu generieren.

6. Kompressorsystem nach Anspruch 4, wobei das Kühlfluid eine Kühlflüssigkeit umfasst.

7. Kompressorsystem nach Anspruch 2, wobei das Kühlfluid eine Kühlflüssigkeit umfasst und die Druckgaseinheit (110) ferner umfasst:
ein Kühlflüssigkeit-Zufuhrsteuerungsmodul (13), welches mit dem Auslasstemperatur-Steuerungsmodul (130) elektrisch verbunden und an den Kühler gekoppelt ist und dazu eingerichtet ist, das zweite Steuersignal zu empfangen und gemäß dem zweiten Steuersignal eine Durchflussrate der in den Kühler einströmenden Kühlflüssigkeit zu steuern, um die Kühlung des Öls und des Druckgases zu steuern.

8. Verfahren zur Steuerung einer Auslasstemperatur, umfassend:
Ermitteln (S1210) einer Auslasstemperatur eines Druckgases, welches aus einem Auslassende eines Kompressorkörpers innerhalb einer Druckgaseinheit ausgelassen wird;
Ermitteln (S1220) einer Zieltemperatur der Druckgaseinheit;
Generieren (S1230) eines ersten Steuersignals gemäß der Zieltemperatur der Druckgaseinheit und der Auslasstemperatur;
Generieren (S1240) eines endgültigen Störgrößenmesssignals der Druckgaseinheit gemäß der Auslasstemperatur; und
Generieren (S1250) eines zweiten Steuersignals gemäß dem ersten Steuersignal und dem endgültigen Störgrößenmesssignal und Senden des zweiten Steuersignals an die Druckgaseinheit, um die Auslasstemperatur des Druckgases zu steuern, welches aus dem Auslassende des Kompressorkörpers ausgelassen wird,
**dadurch gekennzeichnet, dass** das Ermitteln der Zieltemperatur der Druckgaseinheit umfasst:
Ermitteln von Umgebungszustandsinformationen der Druckgaseinheit;
Ermitteln eines Auslassdrucks des Druckgases innerhalb eines Ölabscheiders der Druckgaseinheit; und
Schätzen der Zieltemperatur gemäß den Umgebungszustandsinformationen und dem Auslassdruck;
oder
wobei das Ermitteln der Zieltemperatur der Druckgaseinheit umfasst:
Schätzen der Zieltemperatur durch ein Zieltemperatur-Schätzmodul;
wobei das Generieren des ersten Steuersignals gemäß der Zieltemperatur der Druckgaseinheit und der Auslasstemperatur umfasst:
Generieren eines ersten Operationsergebnisses gemäß der Zieltemperatur und der Auslasstemperatur durch einen ersten Operator; und
Generieren des ersten Steuersignals gemäß dem ersten Operationsergebnis durch eine Steuereinheit;
wobei das Generieren des zweiten Steuersignals gemäß dem ersten Steuersignal und dem endgültigen Störgrößenmesssignal umfasst:
Generieren des zweiten Steuersignals gemäß dem ersten Steuersignal und dem endgültigen Störgrößenmesssignal durch einen zweiten Operator;
wobei das Generieren des endgültigen Störgrößenmesssignals der Druckgaseinheit gemäß der Auslasstemperatur umfasst:
Generieren eines dritten Steuersignals gemäß der Auslasstemperatur durch eine inverse Druckgaseinheit;
Generieren eines anfänglichen Störgrößenmesssignals gemäß dem dritten Steuersignal und dem zweiten Steuersignal durch einen dritten Operator; und
Generieren des endgültigen Störgrößenmesssignals gemäß dem anfänglichen Störgrößenmesssignal durch einen Verstärkungsfilter.

## Revendications

1. Système de compresseur, comprenant :
• une unité de gaz comprimé (110), comprenant un corps de compresseur (111) avec une extrémité de décharge (111a) ;
• un capteur de température (120), disposé au niveau de l'extrémité de décharge du corps de compresseur (111), et configuré pour mesurer une température de décharge d'un gaz comprimé déchargé depuis l'extrémité de décharge du corps de compresseur (111) ; et
• un module de commande de température de décharge (130), connecté électriquement à l'unité de gaz comprimé (110) et au capteur de température (120), respectivement, et comprenant :
• un contrôleur (131), configuré pour générer un premier signal de commande selon une température cible de l'unité de gaz comprimé (110) et la température de décharge ; et
• un observateur de perturbation (132), configuré pour générer un signal de mesure de perturbation final de l'unité de gaz comprimé (110) selon la température de décharge ;
• un capteur d'état environnemental, configuré pour détecter des informations d'état environnemental de l'unité de gaz comprimé (110) ; et
• un capteur de pression (6), disposé dans le séparateur d'huile (7), et configuré pour mesurer une pression de décharge du gaz comprimé dans le séparateur d'huile (7) ;
• une unité de gaz comprimé inverse (1321), connectée électriquement à l'unité de gaz comprimé (110), et configurée pour générer un troisième signal de commande selon la température de décharge ;
• un troisième opérateur (1322), connecté électriquement à l'unité de gaz comprimé inverse (1321), et configuré pour générer un signal de mesure de perturbation initial selon le troisième signal de commande et le deuxième signal de commande ; et
• un filtre de gain (1323), connecté électriquement au troisième opérateur (1322) et configuré pour générer le signal de mesure de perturbation final selon le signal de mesure de perturbation initial.

2. Système de compresseur selon la revendication 1, dans lequel :
le séparateur d'huile (7) est configuré pour distribuer le gaz comprimé mélangé avec de l'huile, déchargé de l'extrémité de décharge du corps de compresseur (111), dans le séparateur d'huile (7) ;
dans lequel l'unité de gaz comprimé (110) comprend en outre :
• un refroidisseur, couplé au séparateur d'huile (7) et configuré pour distribuer le gaz comprimé et l'huile séparés par le séparateur d'huile (7) dans le refroidisseur, respectivement, dans lequel le refroidisseur est en outre configuré pour introduire un fluide de refroidissement dans le refroidisseur, et refroidir le gaz comprimé et l'huile à travers le fluide de refroidissement, distribuant respectivement le fluide de refroidissement après échange thermique, le gaz comprimé refroidi, et l'huile refroidie ;
dans lequel le refroidisseur est connecté électriquement au module de commande de température de décharge (130) et configuré pour recevoir le deuxième signal de commande et commander, selon le deuxième signal de commande, le fluide de refroidissement pour refroidir l'huile, commandant une température de l'huile retournant au corps de compresseur (111), et en outre configuré pour commander, par l'intermédiaire de la température de l'huile retournant au corps de compresseur (111), la température de décharge du gaz comprimé déchargé de l'extrémité de décharge du corps de compresseur (111).

3. Système de compresseur selon la revendication 2, dans lequel le fluide de refroidissement comprend un gaz de refroidissement, et le refroidisseur comprend :
• un dispositif de régulation de vitesse de rotation (720), connecté électriquement au module de commande de température de décharge (130), et configuré pour recevoir le deuxième signal de commande ;
• un générateur d'air, connecté électriquement au dispositif de régulation de vitesse de rotation (720), et configuré pour ajuster une vitesse de rotation du générateur d'air sous le contrôle du deuxième signal de commande, afin de générer le gaz de refroidissement ; et
• un premier dispositif d'échange de chaleur, couplé respectivement au générateur d'air et au séparateur d'huile, configuré pour distribuer respectivement le gaz de refroidissement, le gaz comprimé séparé et l'huile dans le premier dispositif d'échange de chaleur, et pour refroidir le gaz comprimé et l'huile par l'intermédiaire du gaz de refroidissement, extrayant respectivement le fluide de refroidissement après échange thermique, le gaz comprimé refroidi, et l'huile refroidie.

4. Système de compresseur selon la revendication 2, dans lequel le refroidisseur comprend :
• une vanne de commande de déviation de débit d'huile, couplée au séparateur d'huile (7) et au module de commande de température de décharge (130), respectivement ; et
• un deuxième dispositif d'échange de chaleur, couplé à la vanne de commande de déviation de débit d'huile et au séparateur d'huile (7), respectivement, et configuré pour distribuer respectivement le fluide de refroidissement et le gaz comprimé séparé du séparateur d'huile dans le deuxième dispositif d'échange de chaleur ;
dans lequel la vanne de commande de déviation de débit d'huile est configurée pour commander, sous le contrôle du deuxième signal de commande, une proportion de l'huile séparée du séparateur d'huile pénétrant dans le deuxième dispositif d'échange de chaleur ; et
le deuxième dispositif d'échange de chaleur est configuré pour refroidir le gaz comprimé et l'huile à l'intérieur du deuxième dispositif d'échange de chaleur par l'intermédiaire du fluide de refroidissement, extrayant respectivement le fluide de refroidissement après échange thermique, le gaz comprimé refroidi, et l'huile refroidie.

5. Système de compresseur selon la revendication 4, dans lequel le fluide de refroidissement comprend un gaz de refroidissement, et le refroidisseur comprend en outre :
• un générateur d'air, configuré pour générer le gaz de refroidissement.

6. Système de compresseur selon la revendication 4, dans lequel le fluide de refroidissement comprend un liquide de refroidissement.

7. Système de compresseur selon la revendication 2, dans lequel le fluide de refroidissement comprend un liquide de refroidissement, et l'unité de gaz comprimé (110) comprend en outre :
• un module de commande de distribution de liquide de refroidissement (13), connecté électriquement au module de commande de température de décharge (130) et couplé au refroidisseur, et configuré pour recevoir le deuxième signal de commande et commander, selon le deuxième signal de commande, un débit du liquide de refroidissement s'écoulant dans le refroidisseur, commandant le refroidissement de l'huile et du gaz comprimé.

8. Procédé de commande d'une température de décharge, comprenant :
• l'obtention (S1210) d'une température de décharge d'un gaz comprimé déchargé depuis une extrémité de décharge d'un corps de compresseur à l'intérieur d'une unité de gaz comprimé ;
• l'obtention (S1220) d'une température cible de l'unité de gaz comprimé ;
• la génération (S1230) d'un premier signal de commande selon la température cible de l'unité de gaz comprimé et la température de décharge ;
• la génération (S1240) d'un signal de mesure de perturbation final de l'unité de gaz comprimé selon la température de décharge ; et
• la génération (S1250) d'un deuxième signal de commande selon le premier signal de commande et le signal de mesure de perturbation final, et l'envoi du deuxième signal de commande à l'unité de gaz comprimé pour commander la température de décharge du gaz comprimé déchargé de l'extrémité de décharge du corps de compresseur,
**caractérisé en ce que** l'obtention de la température cible de l'unité de gaz comprimé comprend :
• l'obtention d'informations d'état environnemental de l'unité de gaz comprimé ;
• l'obtention d'une pression de décharge du gaz comprimé à l'intérieur d'un séparateur d'huile de l'unité de gaz comprimé ; et
• l'estimation de la température cible selon les informations d'état environnemental et la pression de décharge ;
ou
dans lequel l'obtention de la température cible de l'unité de gaz comprimé comprend :
• l'estimation de la température cible par un module d'estimation de température cible ;
dans lequel la génération du premier signal de commande selon la température cible de l'unité de gaz comprimé et la température de décharge comprend :
• la génération d'un premier résultat d'opération selon la température cible et la température de décharge par un premier opérateur ; et
• la génération du premier signal de commande selon le premier résultat d'opération par un contrôleur ;
dans lequel la génération du deuxième signal de commande selon le premier signal de commande et le signal de mesure de perturbation final comprend :
• la génération du deuxième signal de commande selon le premier signal de commande et le signal de mesure de perturbation final par un deuxième opérateur ;
dans lequel la génération du signal de mesure de perturbation final de l'unité de gaz comprimé selon la température de décharge comprend :
• la génération d'un troisième signal de commande selon la température de décharge par une unité de gaz comprimé inverse ;
• la génération d'un signal de mesure de perturbation initial selon le troisième signal de commande et le deuxième signal de commande par un troisième opérateur ; et
• la génération du signal de mesure de perturbation final selon le signal de mesure de perturbation initial par un filtre de gain.
